# EUROPEAN PATENT SPECIFICATION

(11) **EP 1 985 850 B1**
(45) Date of publication and mention of the grant of the patent: **28.09.2016**
(21) Application number: 06705607.7
(22) Date of filing: 27.01.2006
(51) Int. Cl.: F03D 80/00, F16H 57/08, F16H 57/02, F03B 11/00

(54) **PLANETARY CARRIER ASSEMBLY FOR WIND GENERATING APPARATUS, TRANSMISSION FOR WIND GENERATING APPAPATUS AND WIND GENERATING APPARATUS**
PLANETENTRÄGERANORDNUNG FÜR WINDERZEUGUNGSVORRICHTUNG, GETRIEBE FÜR WINDERZEUGUNGSVORRICHTUNG UND WINDERZEUGUNGSVORRICHTUNG
ENSEMBLE SUPPORT PLANÉTAIRE DESTINÉ À UNE ÉOLIENNE, TRANSMISSION POUR CELLE-CI ET ÉOLIENNE

(30) Priority: 23.12.2005 CN 200510022381
(43) Date of publication of application: 29.10.2008
(73) Proprietor: DongFang Turbine Co., Ltd., Hanwang Town Mianzhu City, 61821 Hanwang Sichuan (CN)
(72) Inventor: ZHANG, Minrui, Sichuan 618000 (CN); HU, Yuncheng, Sichuan 618000 (CN); WANG, Yan, Sichuan (CN); RUAN, Guisheng, Sichuan 618000 (CN); ZHENG, Qian, Sichuan 618000 (CN); YANG, Yiru, Sichuan 618000 (CN)
(74) Representative: Nederlandsch Octrooibureau
(86) International application number: PCT/CN2006/000186
(87) International publication number: WO 2007/071124

(56) References cited:
- EP-A1- 0 271 416
- WO-A1-00/17543
- CN-A- 1 573 166
- CN-Y- 2 661 956
- DD-A- 22 986
- DE-A1- 19 912 719
- GB-A- 2 169 970
- SU-A1- 136 981
- SU-A1- 1 516 669
- SU-A2- 1 170 210
- US-A- 5 470 286
- US-A1- 2004 219 020
- US-B2- 6 702 711

## Description

### FIELD OF THE INVENTION

The invention relates to an innovation of a planet carrier of a planet gearbox for increasing speed in power generation plant, and particularly to an assembled planet carrier, which is especially suitable for increasing the speed of a planet gear between the wind turbine rotor and the generator. The invention further relates to a wind turbine generator variable-speed device and a wind power plant made with the assembled planet carrier.

### BACKGROUND OF THE INVENTION

In a general planet gearbox, the size of an offset angle produced by the shaft axis of the planet gear and that of a central gear is directly proportional to transmission power or torque of the gearbox, which during a variable-power or variable-torque power transmission will result in load deflecting of the gear and two disks of planet bearings, seriously affecting reliability of the calculated life of the bearing. Particularly, a megawatt-level wind-power plant planet gearbox has typical low-speed heavy-duty variable-torque power transmission. Such a problem is generally resolved through gear modification in engineering application. However, the gear modification is designed according to a certain constant torque (working point) that is different in different wind turbines, which will thus result in load deflecting of the gear and two disks of the planet bearings, causing the planet bearings to fail in advance.

SU 136 961 A1 discloses a device of the related art.

### CONTENTS OF THE INVENTION

A purpose of the invention as claimed is to design an assembled planet carrier, a variable-speed device for wind turbine and a wind power plant with a reasonable structure, so as to overcome the above-mentioned shortcomings with the prior art effectively.

The purpose of the invention is realized in the following way:

A variable-speed device for wind turbine generator is provided, including a first hollow transmission bracing frame, a second hollow transmission bracing frame, a connection element, a central gear, an internal gear ring, and multiple planet gears; the first transmission bracing frame and the second transmission bracing frame are provided at the respective side with the multiple connection portions, each of which is provided with the fixing hole; the first transmissions bracing frame is provided with the planet-gear bracing transmission portions having the same number with the planet gears, which are used for mounting each of the planet gears through the bearings and the bracing shaft between the upper and the lower bracing portions of each pair in the first transmission bracing frame; the central gear located at the central axis is meshed with all of the planet gears mounted around, each of which is meshed with the internal gear ring at the same time; the first transmission bracing frame and the second transmission bracing frame are muff coupled together, facingly contact with each other through the respective connection portions, and are tightly fixed via the connection element through the fixing hole; and the second transmissions bracing frame is provided with the external fixing position at the other end opposite to that muff coupled with the first transmission bracing frame.

The first transmission bracing frame and the second transmission bracing frame are uniformly provided at the respective side with an equal number of multiple connection portions. The first transmission bracing frame is an external planet carrier, which is uniformly provided at the side with the connection portions whose internal surface has a cylindrical arc shape. The second transmission bracing frame is the internal planet carrier, which is uniformly provided at the side with the connection portions whose external surface has a cylindrical arc shape. In this way, when the external planet carrier is internally muff coupled with the internal planet carrier, their connection portions contact with each other along the ring-form face, such that the internal and the external planet carriers can be closely fixed.

A wind power plant is provided, including a wind turbine, a variable-speed device as described above and a generator, wherein the second transmissions bracing frame is provided with the external fixing position at the other end opposite to that muff coupled with the first transmission bracing frame; and the turbine rotor is fixedly connected with the external fixing position on the second transmission bracing frame, and the power output shaft of the central gear is fixedly connected with the rotation axis of the generator.

The first transmission bracing frame and the second transmission bracing frame are uniformly provided at the respective side with an equal number of multiple connection portions.

The first transmission bracing frame is the external planet carrier, which is uniformly provided at the side with the connection portions whose internal surface has a cylindrical arc shape; the second transmission bracing frame is the internal planet carrier, which is uniformly provided at the side with the connection portions whose external surface has a cylindrical arc shape; in this way, when the external planet carrier is internally muff coupled with the internal planet carrier, their connection portions contact with each other along the ring-form face, such that the internal and the external planet carriers can be closely fixed.

Each of the connection portions is provided at the center with the fixing hole; the connection portion has a ring-form mating face whose axial size can be closely fitted with the size of the connection element; and the external planet carrier after assembly contacts with the internal planet carrier only at the ring-form mating face, with other parts suspended.

The external planet carrier and the internal planet carrier are uniformly provided with three connection portions, respectively; the external planet carrier is provided with the planet-gear bracing transmission portion; the three planet gears are mounted between the bracing portions in the first transmission bracing frame through the bearings, respectively; and each of the planet gears is meshed with the central gear and the internal gear.

The invention has the following advantages: For the structure of the assembled planet carrier obtained by providing the first transmission bracing frame and the second transmission bracing frame, torque acts on the connection portion (especially the middle part of the connection portion) of the planet carrier, and no matter whether the connection portion deforms or deforms much or less, such a deforming force will not be transferred to the planet gear. Therefore, the axis of the planet gear will not be deflected from, but keep in parallel with, the axis of the central gear (also referred to as a sun gear), thus guaranteeing the lowest load deflecting of the planet gear and an internal gear along the length of the tooth. Furthermore, the torsion tooth direction modification is made for the sun gear. These can lower load deflecting of the sun gear and the planet gear effectively, and guarantee that the two disks of planet bearings are under a force essentially the same in amount and direction, which greatly prolongs service life of the planet bearings and ensures reliability of the planet gear transmission, thereby attaining the purpose of the invention.

### BRIEF DESCRIPTION OF THE DRAWINGS

Figure 1 is a structure schematic view of a wind turbine assembled planet carrier.
Figure 2 is an assembly structure schematic view for Figure 1.
Figure 3 is a partial structure schematic view of a wind turbine variable-speed device.
Figure 4 is a sectional view taken along the line A-A of Figure 3.
Figure 5 is a schematic view of the transmission principle of the variable-speed planet gear set.
Figure 6 is a structure schematic view of a wind power plant.

### DETAILED DESCRIPTION OF THE EMBODIMENTS

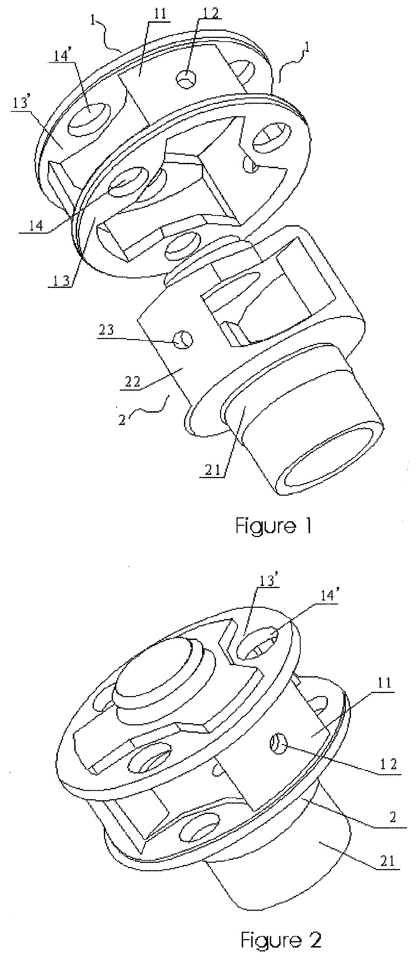

An assembled planet carrier for wind turbine generator is described, which with reference to Figures 1 and 2 includes a first hollow transmission bracing frame 1, a second hollow transmission bracing frame 2 and a connection element 7. The first transmission bracing frame 1 is an external planet carrier, while the second transmission bracing frame 2 is an internal planet carrier. The external planet carrier 1 is provided uniformly at the side with three connection portions 11. Each of the connection portions 11 is provided at the center with a fixing hole 12. The connection portion 11 has a plate-form connection plate structure, which has a cylindrical-arc-form internal surface. On the external planet carrier 1 are uniformly distributed planet-gear bracing transmission portions (13',13), which are used for mounting each of the planet gears through the bearings and the bracing shaft symmetrically between the bracing portions (13',13) on the external planet carrier 1. At the side of the internal planet carrier 2 are uniformly distributed three connection portions 22 corresponding to the connection portions 11 on the external planet carrier 1. Each of the connection portions 22 is provided at the center with a fixing hole 23. The external surface of the connection portion 22 has a cylindrical arc shape fitted with the internal surface of the connection plate 11, such that the external planet carrier 1 and the internal planet carrier 2 facingly contact each other at the cylindrical arc surfaces of the respective connection portions while they are muff coupled together. Through connection via the connection element 7 (e.g. a cylindrical pin or a connection element of other shapes) for transferring torque and fastness via a fastener 6 (e.g. a clamping bolt or other fasteners), the connection portion has an axial size that should be closely fitted with the size of the connection element, and is tightly fixed via the connection element through the fixing hole. The internal planet carrier is provided with an external fixing position 21 (input end of torque) at the other end opposite to that muff coupled with the external planet carrier. The external planet carrier 1 after assembly facingly contacts with the internal planet carrier 2 only at the cylindrical arc surface, with other parts suspended.

It must be pointed out that, this example just gives one form of the assembled planet carrier; according to the amount of the transferred torque, there may be 4, 5, 6 or even more symmetrically positioned connection plates on the assembled planet carrier and the planet-gear bracing transmission portions uniformly distributed inward at the upper and the lower ends of the external planet carrier; moreover, the internal planet carrier 2 can be provided at the input end of torque with a reinforcing side.

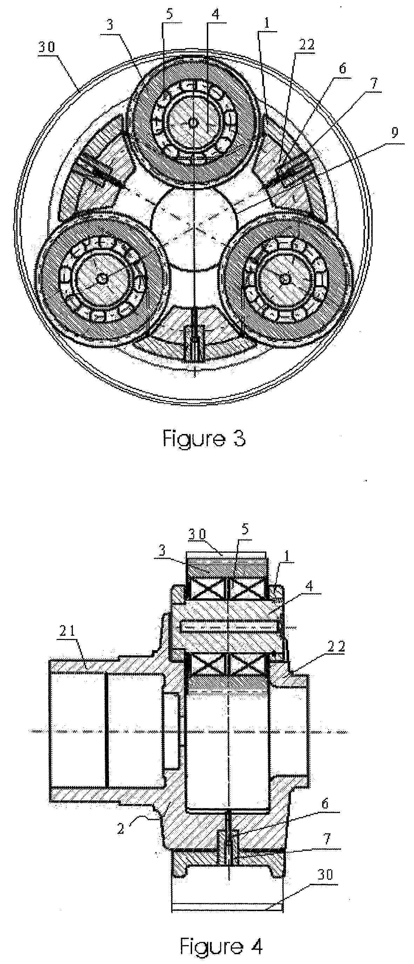

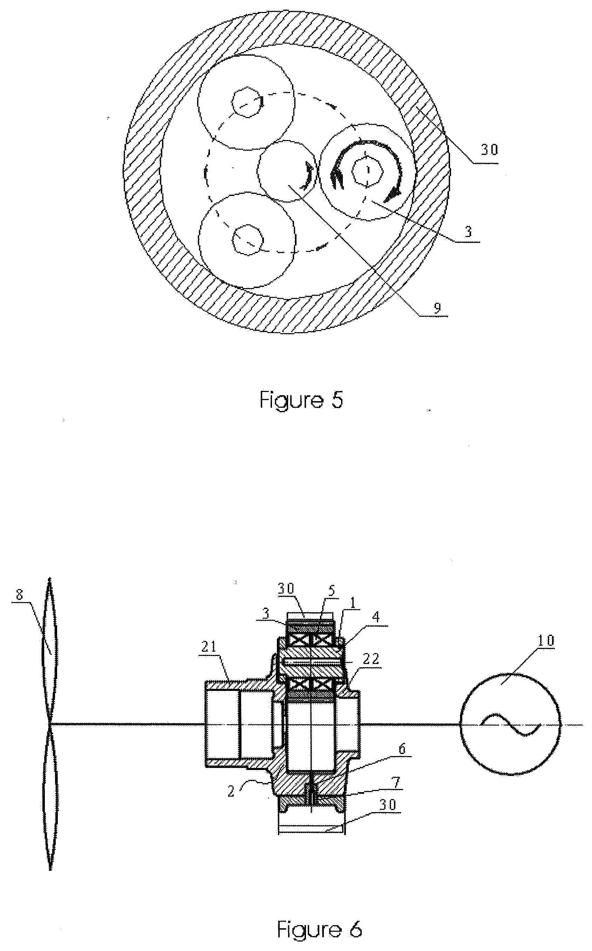

According to the invention, a variable-speed device for wind turbine generator is provided, as shown in Figures 1 to 5, which includes a wind turbine assembled planet carrier, a central gear 9, an internal gear ring 30, and multiple planet gears 3. As shown in Figures 3 and 4, the wind turbine assembled planet carrier has a structure shown in Embodiment 1. On the planet carrier of Embodiment 1 are positioned three planet gears 3, which are mounted uniformly between the bracing portions (13',13) of the external planet carrier through a planet shaft 4, respectively. On the planet shaft 4 can be mounted two or more disks of bearings 5. On the outer ring of the bearing 5 are mounted the planet gears 3s, each of which is meshed both with the central gear 9 and with the internal gear ring 30. It is a prior art that a variable-speed planet gear set is composed of the central gear 9, the internal gear ring 30 and several planet gears 3. Figure 5 is a schematic view of the transmission principle of the variable-speed planet gear set.

During the working process, torque is input from the external fixing position 21 at the left end of the internal planet carrier 2, transferred to the external planet carrier 1 through the connection element 7, and then transferred to the planet shaft 4 through the planet-gear bracing transmission portions (13',13) symmetrically positioned on the external planet carrier 1. The planet shaft 4 will then drive the central gear 9 through the planet gear 3. With this assembled structure, no matter how high the input torque is and how large a torsional deflection is that is produced at the connection plate 11 of the internal planet carrier 2, the shaft axis of the planet shaft 4 on the external planet carrier 1 will always keep in parallel with the axis of the central gear 9. In this way, the load deflecting of the gear pair and the nonuniform bearing-load distribution in the planet gear are both greatly reduced, which improves reliability of the bearing and the gear. Therefore, if necessary, two or more disks of bearings can be mounted on the planet shaft 4, and the planet gear is mounted on the outer ring of the bearing, so as to ensure transmission stability. Therefore, this structure is especially suitable for a variable-torque input occasion, such as wind turbine generator and hydroelectric power plant.

A wind power plant is provided, as shown in Figure 6, which includes a wind turbine rotor 8, and a variable-speed device and a generator 10. The variable-speed device for wind turbine generator has a structure shown in Embodiment 2. The turbine rotor is fixedly muff-coupled with the external fixing position 21 on the internal planet carrier 2, and the power output of the central gear fixedly connected with the rotation axis of the generator. During the working process, the internal planet carrier in the wind turbine variable-speed device is driven with the turbine rotor, and then the generator driven by wind turbine variable-speed device through the central gear after speed increasing generates electricity.

Further, according to requirements of the generator on the speed-increasing transmission ratio, a second-stage, a third-stage or a multiple-stage variable-speed device can be further added behind the wind turbine variable-speed device, and the variable-speed device can be either the wind turbine variable-speed device according to the invention or other variable-speed transmission device. Then the generator is connected.

The present invention relates to a wind power plant, which comprises a wind turbine, and a variable-speed device and a generator; the wind turbine variable-speed device includes a first hollow transmission bracing frame, a second hollow transmission bracing frame, a connection element, a central gear, multiple planet gears, a internal gear ring, a wind turbine and a generator ; the first transmission bracing frame and the second transmission bracing frame are provided at the respective side with the multiple connection portions, each of which is provided with the fixing hole; the first transmission bracing frame is uniformly provided inward at the upper and the lower ends with the planet-gear bracing transmission portions having the same number with the planet gears, which are used for mounting each of the planet gears through the bearings and the bracing shaft symmetrically between the upper and the lower bracing portions of each pair in the first transmission bracing frame; the central gear located at the central axis is meshed with all of the planet gears mounted around, each of which is meshed with the internal gear ring at the same time; the first transmission bracing frame and the second transmission bracing frame are muff coupled together, facingly contact with each other through the respective connection portions, and are tightly fixed via the connection element through the fixing hole; the second transmissions bracing frame is provided with the external fixing position at the other end opposite to that muff coupled with the first transmission bracing frame; and the turbine rotor is fixedly connected with the external fixing position on the second transmission bracing frame, and the power output shaft of the central gear is fixedly connected with the rotation axis of the generator.

Additionally, the present invention relates to the wind power plant as described above, wherein each of the planet shafts is provided with two or more disks of bearings, and each of the bearings with the planet gear on the outer ring.

Furthermore, the present invention relates to the wind power plant as described above, wherein it further includes a second-stage or a multiple-stage variable-speed transmission device, and the power output shaft of the central gear is fixedly connected with the rotation axis of the generator after speed increasing by the second-stage or the multiple-stage variable-speed transmission device.

## Claims

1. A variable-speed device for a wind turbine generator, wherein it comprises a first hollow transmission bracing frame, a second hollow transmission bracing frame, a connection element (7), a central gear (9), an internal gear ring (30), and multiple planet gears (3); the first transmission bracing frame (1) and the second transmission bracing frame (2) are provided at the respective side with the multiple connection portions (22), each of which is provided with a fixing hole (12, 23); the first transmissions bracing frame is provided with the planet-gear bracing transmission portions having the same number with the planet gears (3), which are used for mounting each of the planet gears (3) through bearings and a bracing shaft between the upper and the lower bracing portions (13',13) of each pair in the first transmission bracing frame (1); the central gear (9) located at the central axis is meshed with all of the planet gears (3) mounted around, each of which is meshed with the internal gear ring (30) at the same time; the first transmission bracing frame (1) and the second transmission bracing frame (2) are muff coupled together, facingly contact with each other through the respective connection portions, and are tightly fixed via the connection element (7) through the fixing hole (12); and the second transmissions bracing frame is provided with an external fixing position (21) at the other end opposite to that muff coupled with the first transmission bracing frame (1); the first transmission bracing frame (1) and the second transmission bracing frame (2) are uniformly provided at the respective side with an equal number of multiple connection portions,
**characterized in that** the first transmission bracing frame (1) is an external planet carrier (1), which is uniformly provided at the side with the connection portions (11) whose internal surface has a cylindrical arc shape; the second transmission bracing frame (2) is the internal planet carrier (2), which is uniformly provided at the side with the connection portions (22) whose external surface has a cylindrical arc shape; in this way, when the external planet carrier (1) is internally muff coupled with the internal planet carrier (2), their connection portions (11, 22) contact with each other along the ring-form face, such that the internal and the external planet carriers can be closely fixed.

2. The variable-speed device for a wind turbine generator according to claim 1, wherein each of the connection portions (11, 22) is provided at the center with the fixing hole (12, 23); the connection portion has a ring-form mating face whose axial size can be closely fitted with the size of the connection element (7); and the external planet carrier (1) after assembly contacts with the internal planet carrier (2) only at the ring-form mating face, with other parts suspended.

3. The variable-speed device for a wind turbine generator according to claim 2, wherein the external planet carrier (1) and the internal planet carrier (2) are uniformly provided with three connection portions, respectively; the external planet carrier (1) is provided with the planet-gear bracing transmission portion; the three planet gears (3) are mounted between the bracing portions (13',13) in the first transmission bracing frame (1) through the bearings, respectively; and each of the planet gears (3) is meshed with the central gear (9).

4. The variable-speed device for a wind turbine generator according to any of claims 1 to 3, wherein each of the planet shafts is provided with two or more disks of bearings (5), and each of the bearings with the planet gear on the outer ring.

5. A wind power plant, wherein it comprises a wind turbine, and a variable-speed device according to any one of claims 1-4, and a generator (10); wherein the second transmissions bracing frame is provided with the external fixing position (21) at the other end opposite to that muff coupled with the first transmission bracing frame (1); and a turbine rotor (8) is fixedly connected with the external fixing position (21) on the second transmission bracing frame (2), and the power output shaft of the central gear (9) is fixedly connected with the rotation axis of the generator (10).

6. The wind power plant according to claim 5, wherein each of the connection portions (11, 22) is provided at the center with the fixing hole (12, 23); the connection portion has a ring-form mating face whose axial size can be closely fitted with the size of the connection element (7); and the external planet carrier (1) after assembly contacts with the internal planet carrier (2) only at the ring-form mating face, with other parts suspended.

7. The wind power plant according to claim 6, wherein the external planet carrier (1) and the internal planet carrier (2) are uniformly provided with three connection portions, respectively; the external planet carrier (1) is provided with the planet-gear bracing transmission portion; the three planet gears (3) are mounted between the bracing portions (13',13) in the first transmission bracing frame (1) through the bearings, respectively; and each of the planet gears (3) is meshed with the central gear (9) and the internal gear.

## Patentansprüche

1. Vorrichtung mit variabler Geschwindigkeit für einen Windturbinengenerator, die einen ersten hohlen Getriebeaussteifungsrahmen, einen zweiten hohlen Getriebeaussteifungsrahmen, ein Verbindungselement (7), ein zentrales Zahnrad (9), einen inneren Zahnring (30) und mehrere Planetenzahnräder (3) umfasst; wobei der erste Getriebeaussteifungsrahmen (1) und der zweite Getriebeaussteifungsrahmen (2) auf entsprechenden Seiten mit mehreren Verbindungsteilen (11, 22) vorgesehen sind, die jeweils mit einem Fixierungsloch (12, 23) versehen sind; wobei der erste Getriebeaussteifungsrahmen mit Planetenzahnrad-Getriebeaussteifungsteilen in einer gleichen Anzahl wie die Planetenzahnräder (3) versehen ist, die für die Montage jedes der Planetenzahnräder (3) durch Lager und eine Aussteifungswelle zwischen den oberen und unteren Aussteifungsteilen (13', 13) jedes Paars in dem ersten Getriebeaussteifungsrahmen (1) verwendet werden; wobei das mittlere Zahnrad (9) an der mittleren Achse mit allen darum herum montierten Planetenzahnrädern (3) eingreift, die jeweils gleichzeitig mit dem inneren Zahnring (30) eingreifen; wobei der erste Getriebeaussteifungsrahmen (1) und der zweite Getriebeaussteifungsrahmen (2) miteinander muffengekoppelt sind, einander zugewandt einander über die entsprechenden Verbindungsteile kontaktieren und eng über das Verbindungselement (7) durch das Fixierungsloch (12) fixiert sind; und wobei der zweite Getriebeaussteifungsrahmen mit einer externen Fixierungsposition (21) an dem anderen Ende gegenüber dem mit dem ersten Getriebeaussteifungsrahmen (1) muffengekopppelten vorgesehen ist; wobei der erste Getriebeaussteifungsrahmen (1) und der zweite Getriebeaussteifungsrahmen (2) gleichförmig auf den entsprechenden Seiten mit einer gleichen Anzahl von mehreren Verbindungsteilen vorgesehen sind,
**dadurch gekennzeichnet, dass** der erste Getriebeaussteifungsrahmen (1) ein äußerer Planetenträger (1) ist, der gleichförmig auf der Seite mit den Verbindungsteilen (11) vorgesehen ist, deren Innenfläche eine zylindrische Bogenform aufweist; wobei der zweite Getriebeaussteifungsrahmen (2) der innere Planetenträger (2) ist, der gleichförmig auf der Seite mit den Verbindungsteilen (22) vorgesehen ist, deren Außenfläche eine zylindrische Bogenform aufweist; wobei, wenn der äußere Planetenträger (1) nach innen hin mit dem inneren Planetenträger (2) muffengekoppelt ist, deren Verbindungsteile (11, 22) einander entlang der ringförmigen Fläche kontaktieren, sodass die inneren und äußeren Planetenträger eng fixiert werden können.

2. Vorrichtung mit variabler Geschwindigkeit für einen Windturbinengenerator nach Anspruch 1, wobei jeder der Verbindungsteile (11, 22) in der Mitte mit dem Fixierungsloch (12, 23) versehen ist, wobei der Verbindungsteil eine ringförmige Berührungsfläche aufweist, deren axiale Größe eng mit der Größe des Verbindungselements (7) gepasst werden kann, und wobei der äußere Planetenträger (1) nach der Montage den inneren Planetenträger (2) nur an der ringförmigen Berührungsfläche kontaktiert, während die anderen Teile frei sind.

3. Vorrichtung mit variabler Geschwindigkeit für einen Windturbinengenerator nach Anspruch 2, wobei der äußere Planetenträger (1) und der innere Planetenträger (2) gleichförmig mit jeweils drei Verbindungsteilen versehen sind, wobei der äußere Planetenträger (1) mit den Planetenzahnrad-Gewindeaussteifungsteil versehen ist; wobei die drei Planetenzahnräder (3) jeweils zwischen den Aussteifungsteilen (13', 13) in dem ersten Gewindeaussteifungsrahmen (1) über die Lager montiert sind; und wobei jedes der Planetenzahnräder (3) mit dem zentralen Zahnrad (9) eingreift.

4. Vorrichtung mit variabler Geschwindigkeit für einen Windturbinengenerator nach einem der Ansprüche 1 bis 3, wobei jede der Planetenwellen mit zwei oder mehr Scheiben von Lagern (5) versehen ist und wobei jedes der Lager mit dem Planetenzahnrad an dem äußeren Ring versehen ist.

5. Windkraftanlage, die eine Windturbine, eine Vorrichtung mit variabler Geschwindigkeit nach einem der Ansprüche 1-4 und einen Generator (10) umfasst; wobei der zweite Getriebeaussteifungsrahmen mit der äußeren Fixierungsposition (21) an dem anderen Ende gegenüber dem mit dem ersten Getriebeaussteifungsrahmen (1) muffengekoppelten versehen ist; und wobei ein Turbinenrotor (8) fix mit der äußeren Fixierungsposition (21) an dem zweiten Getriebeaussteifungsrahmen (2) verbunden ist und die Kraftausgabewelle des zentralen Zahnrads (9) fix mit der Drehachse des Generators (10) verbunden ist.

6. Windkraftanlage nach Anspruch 5, wobei jeder der Verbindungsteile (11, 22) in der Mitte mit dem Fixierungsloch (12, 23) versehen ist; wobei der Verbindungsteil eine ringförmige Berührungsfläche aufweist, deren axiale Größe eng mit der Größe des Verbindungselements (7) gepasst werden kann; und wobei der äußere Planetenträger (1) nach der Montage den inneren Planetenträger (2) nur an der ringförmigen Berührungsfläche kontaktiert, während die anderen Teile frei sind.

7. Windkraftanlage nach Anspruch 6, wobei der äußere Planetenträger (1) und der innere Planetenträger (2) gleichförmig jeweils mit drei Verbindungsteilen versehen sind; wobei der äußere Planetenträger (1) mit dem Planetenzahnrad-Getriebeaussteifungsteil versehen ist; wobei die drei Planetenzahnräder (3) jeweils zwischen den Aussteifungsteilen (13', 13) in dem ersten Getriebeaussteifungsrahmen (1) über die Lager montiert sind; und wobei jedes der Planetenzahnräder (3) mit dem zentralen Zahnrad (9) und dem inneren Zahnrad eingreift.

## Revendications

1. Dispositif à vitesse variable pour un générateur d'éolienne, dans lequel il comprend un premier bâti de renforcement de transmission creux, un second bâti de renforcement de transmission creux, un élément de raccordement (7), un engrenage central (9), une couronne dentée interne (30) et plusieurs engrenages planétaires (3) ; le premier bâti de renforcement de transmission (1) et le second bâti de renforcement de transmission (2) sont prévus au niveau du côté respectif avec plusieurs parties de raccordement (11, 22), dont chacune est prévue avec un trou de fixation (12, 23) ; le premier bâti de renforcement de transmission est prévu avec des parties de transmission de renforcement d'engrenage planétaire ayant le même nombre d'engrenages planétaires (3) qui sont utilisés pour monter chacun des engrenages planétaires (3) par le biais des paliers et un arbre de renforcement entre les parties de renforcement supérieure et inférieure (13', 13) de chaque paire dans le premier bâti de renforcement de transmission (1) ; l'engrenage central (9) positionné au niveau de l'axe central est engrené avec la totalité des engrenages planétaires (3) montés autour, dont chacun est engrené avec la couronne dentée interne (30) en même temps ; le premier bâti de renforcement de transmission (1) et le second bâti de renforcement de transmission (2) sont couplés par manchon, en contact de face entre eux par le biais des parties de raccordement respectives, et sont fixés de manière serrée via l'élément de raccordement (7) à travers le trou de fixation (12) ; et le second bâti de renforcement de transmission est prévu avec une position de fixation externe (21) au niveau de l'autre extrémité opposée à celle qui est couplée à manchon avec le premier bâti de renforcement de transmission (1) ; le premier bâti de renforcement de transmission (1) et le second bâti de renforcement de transmission (2) sont uniformément prévus au niveau du côté respectif avec un nombre identique d'une pluralité de parties de raccordement,
**caractérisé en ce que** le premier bâti de renforcement de transmission (1) est un porte-satellites (1) qui est uniformément prévu sur le côté avec les parties de raccordement (11) dont la surface interne a une forme d'arc cylindrique ; le second bâti de renforcement de transmission (2) est le porte-satellites interne (2) qui est uniformément prévu sur le côté avec les parties de raccordement (22) dont la surface externe a une forme d'arc cylindrique ; de cette manière, lorsque le porte-satellites externe (1) est intérieurement couplé à manchon avec le porte-satellites interne (2), leurs parties de raccordement (11, 22) sont en contact entre elles le long de la face de forme annulaire, de sorte que les porte-satellites interne et externe peuvent être étroitement fixés.

2. Dispositif à vitesse variable pour un générateur d'éolienne selon la revendication 1,
dans lequel chacune des parties de raccordement (11, 22) est prévue au centre avec le trou de fixation (12, 23) ; la partie de raccordement a une face de couplage de forme annulaire dont la taille axiale peut être étroitement ajustée avec la taille de l'élément de raccordement (7) ; et le porte-satellites externe (1), après l'assemblage, est en contact avec le porte-satellites interne (2) uniquement au niveau de la face de couplage de forme annulaire, avec d'autres parties suspendues.

3. Dispositif à vitesse variable pour un générateur d'éolienne selon la revendication 2,
dans lequel le porte-satellites externe (1) et le porte-satellites interne (2) sont uniformément prévus avec trois parties de raccordement, respectivement ; le porte-satellites externe (1) est prévu avec la partie de transmission de renforcement d'engrenage planétaire ; les trois engrenages planétaires (3) sont montés entre les parties de renforcement (13', 13) dans le premier bâti de renforcement de transmission (1) par le biais des paliers, respectivement ; et chacun des engrenages planétaires (3) est engrené avec l'engrenage central (9).

4. Dispositif à vitesse variable pour un générateur d'éolienne selon l'une quelconque des revendications 1 à 3, dans lequel chacun des arbres de satellite est prévu avec deux disques de paliers (5) ou plus, et chacun des paliers avec l'engrenage planétaire sur la bague externe.

5. Centrale éolienne, dans laquelle elle comprend une éolienne et un dispositif à vitesse variable selon l'une quelconque des revendications 1 à 4, et un générateur (10) ; dans laquelle le second bâti de renforcement de transmission est prévu avec la position de fixation externe (21) au niveau de l'extrémité opposée à celle qui est couplée à manchon avec le premier bâti de renforcement de transmission (1) ; et un rotor de turbine (8) est raccordé de manière fixe avec la position de fixation externe (21) sur le second bâti de renforcement de transmission (2) et l'arbre de sortie de puissance de l'engrenage central (9) est raccordé de manière fixe à l'axe de rotation du générateur (10).

6. Centrale éolienne selon la revendication 5, dans laquelle chacune des parties de raccordement (11, 22) est prévue au centre avec le trou de fixation (12, 23) ; la partie de raccordement a une face de couplage de forme annulaire dont la taille axiale peut être étroitement ajustée avec la taille de l'élément de raccordement (7) ; et le porte-satellites externe (1), après l'assemblage, est en contact avec le porte-satellites interne (2) uniquement au niveau de la face de couplage de forme annulaire, avec d'autres parties suspendues.

7. Centrale éolienne selon la revendication 6, dans laquelle le porte-satellites externe (1) et le porte-satellites interne (2) sont uniformément prévus avec trois parties de raccordement, respectivement ; le porte-satellites externe (1) est prévu avec la partie de transmission de renforcement d'engrenage planétaire ; les trois engrenages planétaires (3) sont montés entre les parties de renforcement (13', 13) dans le premier bâti de renforcement de transmission (1) par le biais des paliers, respectivement ; et chacun des engrenages planétaires (3) est engrené avec l'engrenage central (9) et l'engrenage interne.
